# EUROPÄISCHE PATENTSCHRIFT

(11) **EP 0 991 541 B1**
(45) Veröffentlichungstag und Bekanntmachung des Hinweises auf die Patenterteilung: **09.01.2002**
(21) Anmeldenummer: 98930521.4
(22) Anmeldetag: 30.06.1998
(51) Int. Cl.: B60K 17/344, F16H 37/04

(54) **ZWEISTUFIGES VERTEILERGETRIEBE MIT EINEM VERSETZTEN ABTRIEB**
TWO-STAGE TRANSFER GEAR-BOX WITH ONE DISPLACED MAIN DRIVE PINION
BOITE DE TRANSFERT A DEUX ETAGES POURVUE D'UNE SORTIE DEPORTEE

(30) Priorität: 01.07.1997 AT 112397
(43) Veröffentlichungstag der Anmeldung: 12.04.2000
(73) Patentinhaber: Steyr-Daimler-Puch Fahrzeugtechnik AG & CO. KG, 1010 Wien (AT)
(72) Erfinder: LIPPITSCH, Klaus, A-8020 Graz (AT)
(74) Vertreter: Kovac, Werner, Dipl.-Ing.
(86) Internationale Anmeldenummer: AT9800161
(87) Internationale Veröffentlichungsnummer: WO9901310

(56) Entgegenhaltungen:
- EP-A- 0 531 088
- DE-A- 1 952 468
- GB-A- 2 035 930
- US-A- 4 804 061
- US-A- 4 907 473
- US-A- 5 700 222

## Beschreibung

Die Erfindung handelt von einem zweistufigen Verteilergetriebe für Kraftfahrzeuge, bestehend aus einem Gehäuse, einer Eingangswelle, einem Planetengetriebe als Geländegangstufe, einem Differentialgetriebe, einer ersten Abtriebswelle und einer zweiten Abtriebswelle, wobei das Planetengetriebe aus einem Sonnenrad, einem Planetenträger mit Planetenrädern und einem Hohlrad besteht, wobei das Hohlrad mit dem Gehäuse drehfest verbunden ist und der Kraftfluß von der Eingangswelle wahlweise über eines der beiden anderen Glieder des Planetengetriebes zum Differentialgetriebe erfolgt, und wobei das Differentialgetriebe Ausgleichsräder und von diesen angetriebene erste und zweite Abtriebsräder jeweils auf der ersten und der zweiten Abtriebswelle aufweist.

Derartige Verteilergetriebe werden in der Bauweise mit einem versetzten Abtrieb "single offset" genannt. Sie sind meist in allradangetriebenen Kraftfahrzeugen an die längs eingebaute Motor-Getriebe-Einheit angeflanscht. Der versetzte Abtrieb ist dann meist der für die Vorderachse. Bei immer größer und länger bauenden Motor-Getriebe-Einheiten (vielzylindriger Motor, viele Getriebegänge) ist es geboten, das Verteilergetriebe so kompakt, insbesondere so kurz, wie möglich auszuführen und den versetzten Abtrieb zur Vorderachse möglichst weit vorne vorzusehen.

Aus der EP 531 088 A1 ist ein derartiges Verteilergetriebe bekannt, bei dem in Längsrichtung der Reihe nach zuerst ein Planetengetriebe als Geländegangstufe, dann in einigem Abstand ein Planetendifferential, sodann eine Sperrkupplung und dann erst das Abtriebsrad für die Vorderachse vorgesehen ist. Dieses Verteilergetriebe baut somit sehr lang, das hintenliegende Abtriebsrad erfordert eine lange Kardanwelle zur Vorderachse, was auch aus schwingungstechnischen Gründen ungünstig ist. Der Abstand zwischen Geländegangstufe und Differential wirkt sich besonders ungünstig auf Bauraum, Gewicht und Biegeeigenfrequenz aus.

Aus der DE 41 13 965 C2 ist ein ähnliches Verteilergetriebe bekannt, das im Anschluß an die Geländeganggruppe ein Kegelraddifferential aufweist. Dieses Differential vergrößert die Baulänge, im Vergleich zu einem Planetendifferential, zusätzlich, ohne eine Vorverlegung des Abtriebsrades für die Vorderachse zu erlauben.

Es ist somit Ziel der Erfindung, ein gattungsgemäßes Verteilergetriebe möglichst kompakt (insbesondere kurz) und schwingungssteif auszubilden, und das Abtriebsrad für die Vorderachse möglichst weit vorne anzuordnen.

Dazu sind erfindungsgemäß die Ausgleichsräder auf dem Planetenträger des Planetengetriebes der Geländegangstufe gelagert und ist das erste Abtriebsrad vor dem Planetengetriebe der Geländegangstufe und das zweite Abtriebsrad hinter diesem angeordnet.

Es ist also das Planetengetriebe mit dem Differential zu einer Baugruppe vereint, die in achsialer Richtung sehr kurz baut und die es gestattet, ein Abtriebsrad vor und eines hinter dieser Baugruppe anzuordnen. Also Gewichts- und Kostenreduktion durch Mehrfachfunktion zumindest des Planetenträgers. Damit wird auch der vorverlegte Abtrieb zur Vorderachse und insgesamt ein sehr steifer Antriebsstrang möglich.

In einer ersten Ausführungsform sind die Ausgleichsräder zwischen den Planetenrädern des Planetengetriebes der Geländegangstufe angeordnete Kegelräder, die direkt mit dem ersten und zweiten Abtriebsrad kämmen (Anspruch 2). So überbrücken die mit den beiden Abtriebsrädern kämmenden Kegelräder das Planetengetriebe. Da sie in Umfangsrichtung zwischen den Planetenrädern angeordnet sind, wird der Durchmesser der Baugruppe dadurch nicht wesentlich vergrößert. Das Verhältnis der Drehmomentverteilung zwischen den beiden Abtriebsrädern kann durch Wahl deren Zähnezahl angepasst werden, wobei dann die Achse der Ausgleichsräder entsprechend geneigt ist.

Eine besonders einfache Konstruktion mit vielen Gleichteilen wird erhalten, wenn die Achsen der Ausgleichsräder radial gerichtet sind (Anspruch 3).

In einer zweiten Ausführungsform sind die Ausgleichsräder Stirnräder, die einerseits mit dem ersten oder zweiten Abtriebsrad und andererseits mit einem ersten Zwischenrad kämmen, und kämmt ein zweites Zwischenrad mit dem zweiten oder ersten Abtriebsrad, wobei erstes und zweites Zwischenrad drehfest mit einer im Planetenträger gelagerten Welle verbunden sind (Anspruch 4). Diese Ausführungsform gibt große Freiheit bei der Wahl des Verhältnisses der Drehmomentverteilung und erlaubt die Anbringung der Ausgleichsräder an der dem ersten Abtriebsrad zugewandten Seite des Planetengetriebes.

In einer besonders einfachen und kostengünstigen Weiterentwicklung der zweiten Ausführungsform sind die Ausgleichsräder koaxial mit den Planetenrädern des Planetengetriebes angeordnet, kämmen mit dem ersten Abtriebsrad und die ersten Zwischenräder sind zwischen den Ausgleichsrädern angeordnet (Anspruch 5).

In einer dritten Ausführungsform sind die Ausgleichsräder Paare miteinander kämmender schrägverzahnter Stirnradwalzen, von denen die eine mit dem ersten Abtriebsrad und die andere mit dem zweiten Abtriebsrad kämmen, wobei erstes und zweites Abtriebsrad schrägverzahnte Stirnräder sind (Anspruch 6). Auf diese Weise wird ein besonders wenig Bauraum in Anspruch nehmendes Differential (es wird bisweilen auch Torsendifferential genannt) erhalten. Es kann bei entsprechender Auslegung auch eine gewisse Sperrwirkung ausüben, sodaß sich eine zusätzliche Differentialsperre erübrigt.

Eine Vereinfachung der dritten Ausführungsform wird noch dadurch erreicht, daß die Paare Stirnradwalzen achsenlos im Planetenträger geführt sind und daß jede Stirnradwalze an der Stelle eines der beiden Abtriebsräder eine Freistellung aufweist (Anspruch 7). Diese ermöglicht eine weitere Reduktion des Raumbedarfes und die Ausbildung der Stirnradwalzen als Gleichteile.

Das Planetengetriebe für die Geländegangstufe kann sehr verschieden ausgebildet und beschaltet sein. Die Schaltung kann durch wahlweise Verbindung des Hohlrades mit entweder dem Gehäuse oder dem Planetenträger erfolgen oder durch wahlweise Verbindung der Eingangswelle mit dem einen oder anderen Glied des Planetengetriebes. In einer möglichen Ausführungsform ist das Hohlrad gehäusefest und zur Schaltung der Geländegangstufe ist eine Schiebehülse vorgesehen, deren vorderes Ende mittels erster Kuppelzähne mit der Eingangswelle gekuppelt und deren hinteres Ende mittels zweiter Kuppelzähne mit dem Sonnenrad beziehungsweise mit dem Planetenträger des Planetengetriebes kuppelbar ist, wobei die Kuppelhülse an ihrem vorderen Ende einen Ring für den Eingriff einer Schaltgabel aufweist (Anspruch 8). Dadurch kann dieser Ring ganz nach vorne verlegt werden, was die Baulänge vermindert. Das gehäusefeste Hohlrad erleichtert die Lagerung und Zentrierung des Planetengetriebes.

In einer bevorzugten Weiterbildung trägt der Planetenträger eine durch das erste Abtriebsrad nach vorne reichende Hohlwelle, deren vorderes Ende gelagert ist und einen radialen Kragen aufweist, der mit dem Ring am vorderen Ende der Schiebehülse eine Synchronisiereinrichtung für die Schaltung des Geländeganges bildet (Anspruch 9). Die Vorteile der Synchronisierung liegen auf der Hand. Sie wird hierdurch mit besonders geringem Bauaufwand erreicht.

Im Folgenden wird die Erfindung anhand von Abbildungen beschrieben und erläutert. Es stellen dar:
- Fig.1:: Eine erste Ausführungsform des erfindungsgemäßen Verteilergetriebes im Längsschnitt, schematisch;
- Fig.2:: Einen Querschnitt nach II-II in Fig. 1;
- Fig.3:: Eine zweite Ausführungsform des erfindungsgemäßen Verteilergetriebes im Längsschnitt, schematisch;
- Fig.4:: Eine dritte Ausführungsform des erfindungsgemäßen Verteilergetriebes im Längsschnitt;
- Fig.5:: Einen Querschnitt nach V-V in Fig.4.

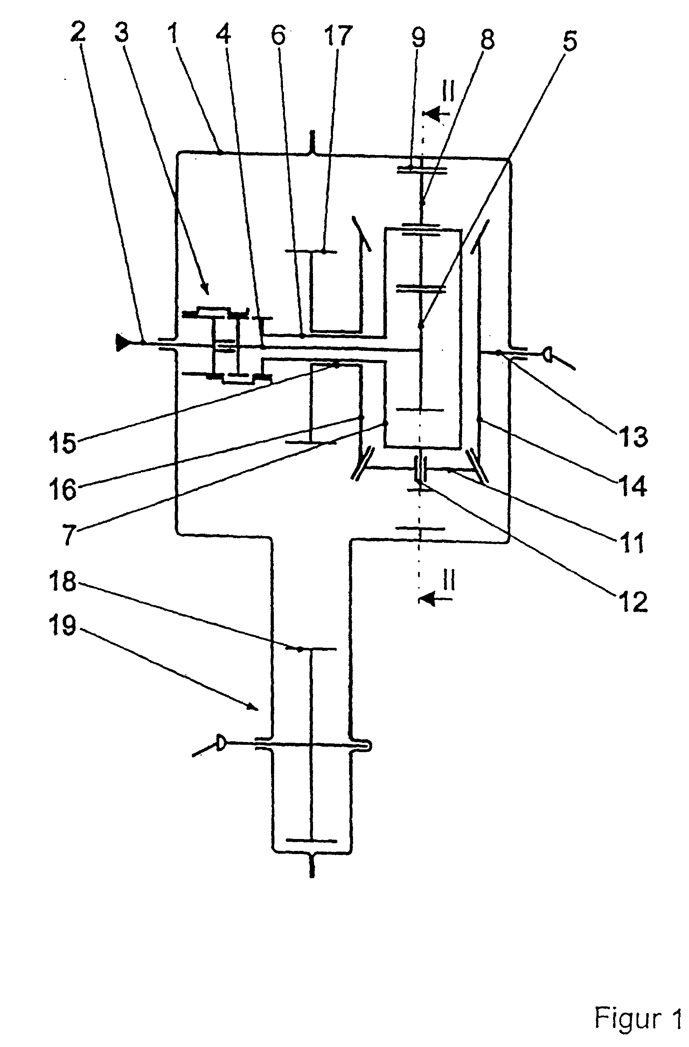

In der Fig.1, die das erste Ausführungsbeispiel zeigt, ist das Gehäuse mit 1 und die von einer nicht dargestellten Motor-Getriebe-Einheit kommende Eingangswelle mit 2 bezeichnet. In einer beispielsweisen Ausführung treibt die Eingangswelle 2 mittels einer Schaltkupplung 3 entweder eine Sonnenradwelle 4 oder eine Planetenträgerwelle 6. Erstere treibt ein Sonnenrad 5, das Teil eines die Geländeganggruppe bildenden Planetengetriebes ist, die Planetenträgerwelle 6 treibt einen Planetenträger 7, auf dem Planetenräder 8 drehbar gelagert sind. Diese Planetenräder 8 kämmen mit einem raumfest im Gehäuse 1 montierten Hohlrad 9. Sonnenrad 5, Planetenträger 7, die Planetenräder 8 und Hohlrad 9 bilden das als Geländeganggruppe dienende Planetengetriebe. Die Anordnung und Verbindung der Glieder des Planetengetriebes könnte aber auch anders getroffen sein, etwa mit einem Hohlrad, das wahlweise mit dem Gehäuse oder mit dem Planetenträger kuppelbar ist.

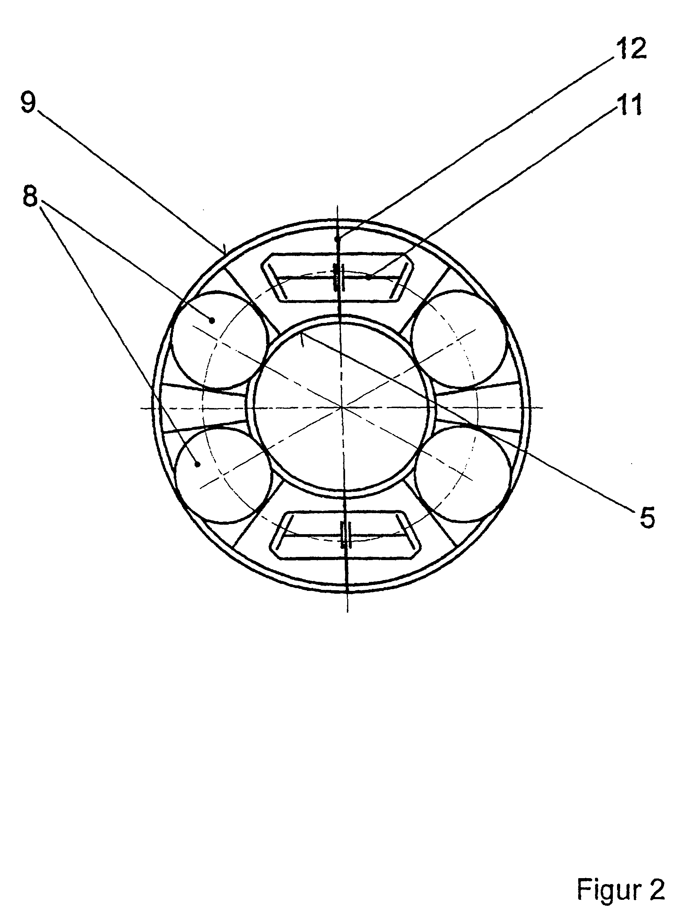

In Umfangsrichtung zwischen den Planetenrädern 8 (siehe Fig.2) sind als Kegelräder ausgebildete Ausgleichsräder 11 angeordnet, die um mit dem Planetenträger 7 verbundene, in diesem Fall radiale, Achsen 12 drehbar sind. Die Ausgleichsräder 11 kämmen auf der einen Seite des Planetengetriebes mit einem ersten Abtriebsrad 14, das auf einer ersten Abtriebswelle 13 (die zur Hinterachse führt) sitzt, und andererseits mit einem zweiten Abtriebsrad 16 auf einer zweiten Abtriebswelle 15. Die beiden Abtriebsräder 14,16 sind ebenfalls Kegelräder. Die zweite Abtriebswelle 15 ist vor dem Planetengetriebe, also auf der Seite der Eingangswelle angeordnet und trägt ein erstes Transmissionsrad 17, das in beliebiger Weise (zB über ein Zugband) ein zweites Transmissionsrad 18 antreibt, von dem versetzt gegenüber der Eingangswelle 2 und der ersten Abtriebswelle 13 ein Abtrieb 19 für die Vorderachse ausgeht.

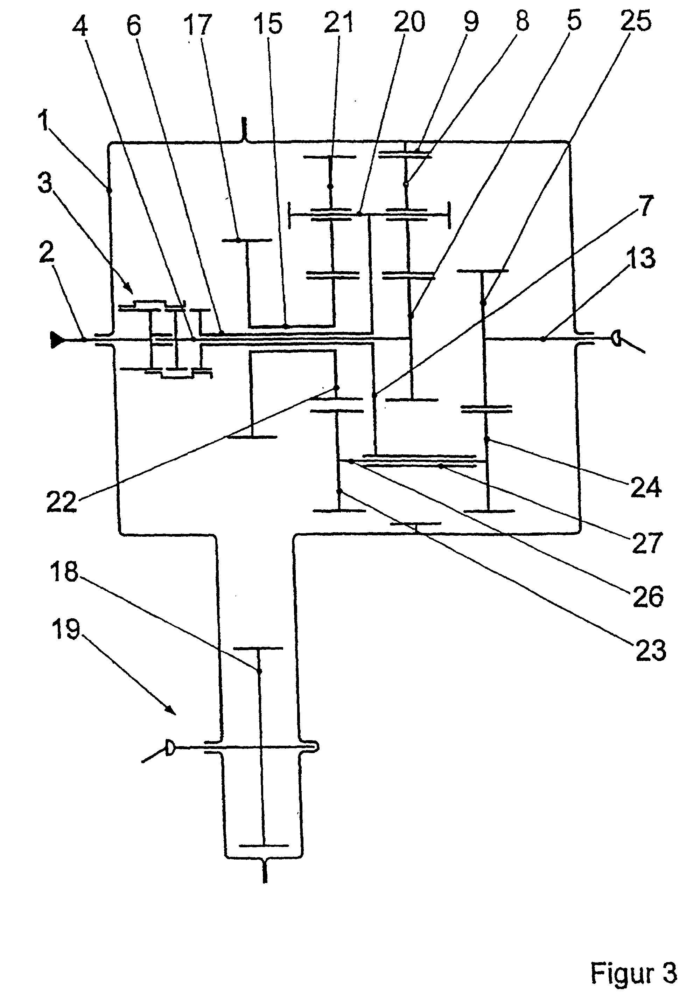

Fig.3 zeigt eine zweite Ausführungsform. Die Bezugszeichen 1 bis 9, 13,15,17,18,19 werden auch hier verwendet. An Achsen 20 des Planetenträgers 7 sind auf der der Eingangswelle 2 abgewandten Seite Planetenräder 8 drehbar gelagert, die wie in Fig.1, mit einem Sonnenrad 5 und mit einem gehäusefesten Hohlrad 9 kämmen und die Geländeganggruppe bilden. Auf der der Eingangswelle zugekehrten Seite des Planetenträgers 7 sind Ausgleichsräder 21 angeordnet, die als Stirnräder ausgebildet und aus Symmetriegründen mehrfach vorhanden sind. Die Ausgleichsräder 21 kämmen einerseits mit einem zweiten Abtriebsrad 22 und andererseits mit je einem ersten Zwischenrad 23. Dieses erste Zwischenrad 23 ist über eine in einer Bohrung 27 des Planetenträgers 7 gelagerte Welle 26 drehfest mit einem zweiten Zwischenrad 24 verbunden, welches seinerseits mit einem ersten Abtriebsrad 25 kämmt. Von diesem führt eine erste Abtriebswelle zur Hinterachse.

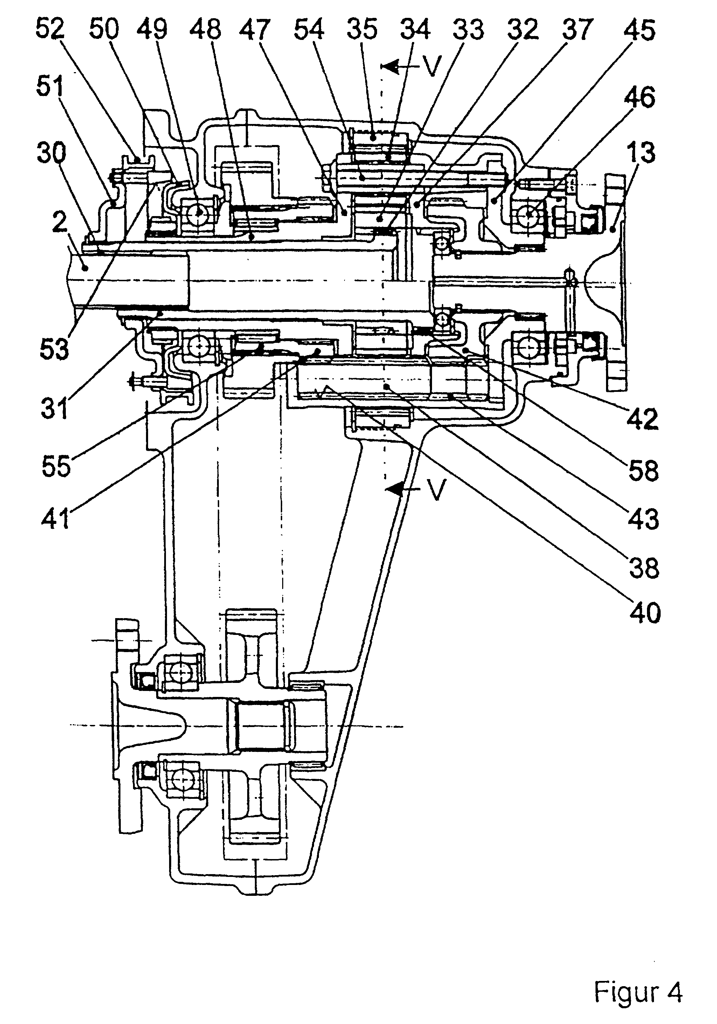

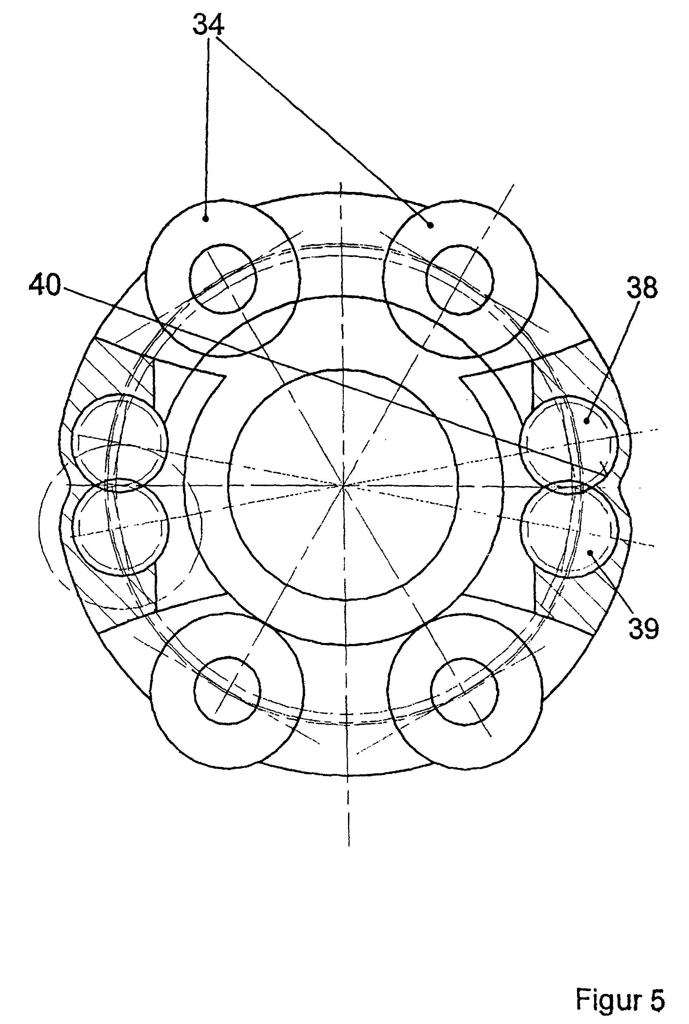

In der dritten Ausführungsform gemäß Fig.4,5 ist die Eingangswelle 2 über erste Kuppelzähne 30 mit dem vorderen Ende einer Schiebehülse 31 drehfest verbunden, welche an ihrem hinteren Ende zweite Kuppelzähne 32 aufweist, die in entsprechende Zähne eines Sonnenrades 33 eingreifen (obere Bildhälfte). Planetenräder 34 kämmen innen mit dem Sonnenrad 33 und außen mit einem gehäusefesten Hohlrad 35. Die Planetenräder 34 sind in einem Planetenträger 37 gelagert. In Umfangsrichtung zwischen den Planetenrädern 34 sind, achsparallel und miteinander kämmend, schrägverzahnte Stirnradwalzen 38,39 drehbar aufgenommen. Diese Walzen sind sehr schräg verzahnt, sodaß sie sogenannte Torsen bilden. Beide Stirnradwalzen sind nicht auf einer Achse gelagert, sondern nur in einer nach innen offenen Bohrung 40 im Planetenträger 37 geführt. Die erste Stirnradwalze 38 kämmt mit einem zweiten Abtriebsrad 41, die zweite Stirnradwalze 39 (Fig. 5) mit einem ersten Abtriebsrad 42. Deshalb hat die Stirnradwalze 38 in der Umgebung des ersten Abtriebsrades 42 eine Freistellung 43.

Der Planetenträger 37 bildet zusammen mit einem hinteren Flansch 45 und einem vorderen Flansch 47, zusammengehalten von über den Umfang verteilten Schraubbolzen 54, einen Korb, der hinten in einem Lager 46 geführt ist und vorne in eine Hohlwelle 48 übergeht, die ihrerseits in einem vorderen Planetenträgerlager 49 geführt ist. Die Hohlwelle 48 endet mit einem radialen Kragen 50.

Die Schiebehülse 31 ist an ihrem vorderen Ende mit einem Ring 51 versehen, der eine Nut 52 für eine nicht dargestellte Schaltgabel und eine, beispielsweise konische, Fläche 53 für eine Synchronisiereinrichtung aufweist, die mit dem radialen bzw hier konischen Kragen 50 zusammenwirkt.

In Fig.4 ist oberhalb der Mittellinie der Eingangswelle 2 die Schiebehülse 31 in der der dem Geländegang entsprechenden Stellung, in der die zweiten Kuppelzähne 32 in das Sonnenrad 33 eingreifen. Unterhalb der Mittellinie befindet sich die Schiebehülse 31 in der dem Straßengang entsprechenden Stufe, in der die Kuppelzähne 32 in entsprechende Zähne 58 des Planetenträgers 37 eingreifen.

## Patentansprüche

1. Zweistufiges Verteilergetriebe für Kraftfahrzeuge, bestehend aus einem Gehäuse (1), einer Eingangswelle (2), einem Planetengetriebe als Geländegangstufe, einem Differentialgetriebe, einer ersten Abtriebswelle (13) und einer zweiten Abtriebswelle (15), wobei das Planetengetriebe aus einem Sonnenrad (5;33), einem Planetenträger (7;37) mit Planetenrädem (8;34) und einem Hohlrad (9;35) besteht, wobei das Hohlrad (9;35) mit dem Gehäuse (1) drehfest verbunden ist und der Kraftfluß von der Eingangswelle (2) wahlweise über eines der beiden anderen Glieder des Planetengetriebes zum Differentialgetriebe erfolgt, und wobei das Differentialgetriebe Ausgleichsräder (11; 21; 38,39) und von diesen angetriebene erste und zweite Abtriebsräder (14,16; 22,25; 42,41) jeweils auf der ersten und der zweiten Abtriebswelle (13,15; 13,55) aufweist, **dadurch gekennzeichnet, daß** die Ausgleichsräder (11; 21; 38,39) in dem Planetenträger (7; 37) des Planetengetriebes der Geländegangstufe gelagert sind, und daß das erste Abtriebsrad (14; 25; 42) vor dem Planetengetriebe (5,8,9; 33,34,35) der Geländegangstufe und das zweite Abtriebsrad (16; 22; 41) hinter diesem angeordnet ist.

2. Zweistufiges Verteilergetriebe nach Anspruch 1, **dadurch gekennzeichnet, daß** die Ausgleichsräder (11) zwischen den Planetenrädern (8) des Planetengetriebes der Geländegangstufe angeordnete Kegelräder sind, die direkt mit dem ersten und zweiten Abtriebsrad (14,16) kämmen. (Fig.1,2)

3. Zweistufiges Verteilergetriebe nach Anspruch 2, **dadurch gekennzeichnet, daß** die Achsen (12) der Ausgleichsräder (11) radial gerichtet sind. (Fig.1,2)

4. Zweistufiges Verteilergetriebe nach Anspruch 1, **dadurch gekennzeichnet, daß** die Ausgleichsräder (21) Stirnräder sind, die einerseits mit dem ersten oder zweiten Abtriebsrad (22,25) und andererseits mit einem ersten Zwischenrad (23) kämmen, und daß ein zweites Zwischenrad (24) mit dem zweiten oder ersten Abtriebsrad (25,22) kämmt, wobei erstes und zweites Zwischenrad (23,24) drehfest mit einer im Planetenträger (7) gelagerten Welle (26) verbunden sind. (Fig.3)

5. Zweistufiges Verteilergetriebe nach Anspruch 4, **dadurch gekennzeichnet, daß** die Ausgleichsräder (21) koaxial mit den Planetenrädern (8) des Planetengetriebes angeordnet sind und mit dem zweiten Abtriebsrad (22) kämmen und daß die ersten Zwischenräder (23) zwischen den Ausgleichsrädern (21) angeordnet sind. (Fig.3)

6. Zweistufiges Verteilergetriebe nach Anspruch 1, **dadurch gekennzeichnet, daß** die Ausgleichsräder (38,39) Paare miteinander kämmender schrägverzahnter Stirnradwalzen sind, von denen die eine (39) mit dem ersten Abtriebsrad (42) und die andere (38) mit dem zweiten Abtriebsrad (41) kämmen, wobei erstes und zweites Abtriebsrad (42,41) schrägverzahnte Stirnräder sind. (Fig.4,5)

7. Zweistufiges Verteilergetriebe nach Anspruch 6, **dadurch gekennzeichnet, daß** die Paare Stirnradwalzen (38,39) achsenlos im Planetenträger (37) geführt sind und daß jede Stirnradwalze (38,39) an der Stelle eines der beiden Abtriebsräder (42,41) eine Freistellung (43) aufweist. (Fig.4,5)

8. Zweistufiges Verteilergetriebe nach Anspruch 1, **dadurch gekennzeichnet, daß** Hohlrad (9;35) raumfest ist und zum Schalten der Geländegangstufe eine Schiebehülse (31) vorgesehen ist, deren vorderes Ende mittels erster Kuppelzähne (30) mit der Eingangswelle (2) gekuppelt und deren hinteres Ende mittels zweiter Kuppelzähne (32) mit dem Sonnenrad (33) beziehungsweise mit dem Planetenträger (37) des Planetengetriebes kuppelbar ist, wobei die Schiebehülse (31) an ihrem vorderen Ende einen Ring (51) für den Eingriff einer Schaltgabel aufweist. (Fig.4,5)

9. Zweistufiges Verteilergetriebe nach Anspruch 8, **dadurch gekennzeichnet, daß** der Planetenträger (37) eine durch das erste Abtriebsrad (41) nach vorne reichende Hohlwelle (48) bildet, deren vorderes Ende in einem Lager (49) abgestützt ist und einen radialen Kragen (50) aufweist, der mit dem Ring (51) am vorderen Ende der Schiebehülse (31) eine Synchronisiereinrichtung für das Schalten der Geländegangstufe bildet. (Fig.4,5)

## Claims

1. A two-stage transfer box for motor vehicles, consisting of a housing (1), an input shaft (2), a planetary drive constituting the oft-highway stage, a differential drive, a first output shaft (13) and, a second output shaft (15), wherein the planetary drive consists of a sun gear (5; 33), a planetary carrier (7, 37) with planetary gears (8; 34) and a hollow gear (9; 35), wherein the hollow gear (9; 35) is connected to the housing (1) in a rotationally fast way and wherein the power flow from the input shaft (2) optionally takes place via one of the two other members of the planetary drive to the differential drive, and wherein the differential drive comprises differential gears (11; 21; 38, 39) and first and second output gears (14, 16; 22, 25; 42, 41) driven by said differential gears and positioned on the first and the second output shaft (13, 15; 13, 55) respectively, **characterised in that** the differential gears (11; 21; 38, 39) are supported in the planetary carrier (7, 37) of the planetary drive of the off highway stage and that the first output gear (14; 23; 42) is arranged in front of the planetary drive (5, 8, 9; 33,34, .3.5) arid that the second output gear (16; 22; 41) is arranged behind said planetary drive.

2. A Two-stage transfer box according to claim 1, **characterised in that** the differential gears (11) constitute bevel gears which are arranged between the planetary gears (8) of the planetary drive of the off-highway stage and which engage directly the first and the second output gear (14, 16). (Figures 1, 2)

3. A Two-stage transfer box according to claim 2, **characterised in that** the axes (12) of the differential gears (11) extend radially. (Figures 1, 2).

4. A two-stage transfer box according to claim 1, **characterised in that** the differential gears (21) arc spur gears which, on the one hand, engage the first or the second output gear (22, 25) and, on the other hand a first intermediate gear (23)1 and that a second intermediate gear (24) engages the first or second output gear (25, 22), wherein the first and the second intermediate gears (23, 24) are connected to a shaft (26) supported in. the planetary carrier (7) in a rotationally fast way. (Figure 3).

5. A two-stage transfer box according to claim 4, **characterised in that** the differential gears (21) are arranged co-axially relative to the planetary gears (8) of the planetary drive and engage the second output gear (22) and that the first intermediate gears (23) are arranged between the differential gears (21) . (Fig.3).

6. A two-stage transfer box according to claim 1., **characterised in that** the differential gears (38, 39) are pairs of inter-engaging helically toothed spur gear rollers of which the one (39) engages the first output gear (42) and the other one (38) the second output gear (41), with the first and the second output gears (42, 41) being helically toothed spur gears. (Fig.4, 5).

7. A two-stage transfer box according to claim 6, **characterised in that** the pair of spur gear rollers (38, 39) are guided in the planetary carrier (37) in an axis-less way and that, in the region of one of the two output gears (42, 41), each of thc spur gcar rollers (38, 39) comprises a free position (43) (literal translation) (Figures 4, 5).

8. A two-stage transfer box according to claim 1, **characterised in that** the hollow gear (9; 35) is in a fixed position and that for switching the off-highway stage, therc is provided a, sliding sleeve (31) whose front end is coupled to the input shaft (2) by means of first coupling teeth (30) and whose rear end is connected to the sun gear (33) , and, respectively, to the planetary carrier (37) of the planetary drive by means of second coupling teeth (32), wherein the sliding sleeve (31), at its front end, comprises a ring (51) to allow the engagement of a gearbox selector fork. (Figures 4, 5).

9. A two-stage transfer box according to claim 8, **characterised in that** the planetary carrier (37) forms a hollow shaft (48) which extends forwards through the first output gear (41) and whose front end is supported in a bearing (49) arid comprises a radial collar (50) which, together with the ring (51) at the front end of the sliding sleeve (31), forms a synchronising device for switching the off-highway stage. (Figures 4, 5).

## Revendications

1. Boîte de transfert à deux étages pour véhicules automobiles, comportant un carter (1), un arbre d'entrée (2), un engrenage planétaire servant d'étage tout-terrain, un engrenage différentiel, un premier arbre mené (13) et un second arbre mené (15), dans lequel l'engrenage planétaire est constitué d'une roue solaire (5 ;33), d'une cage de transmission planétaire (7 ; 37) avec des roues planétaires (8 ; 34) et d'une couronne de train planétaire (9 ; 35), dans lequel la couronne de train planétaire (9 ; 35) est reliée fixe en rotation au carter (1) et la puissance est transmise de l'arbre d'entrée (2) à l'engrenage différentiel au choix par l'un des deux autres éléments de l'engrenage planétaire, et dans lequel l'engrenage différentiel comporte des roues de compensation (11 ; 21 ; 38, 39) et des première et seconde roues menées (14, 16 ; 25, 22 ; 42, 41) entraînées par ces dernières et montées respectivement sur le premier et le second arbres menés (13, 15 ; 13, 55), **caractérisée en ce que** les roues de compensation (11 ; 21 ; 38, 39) sont montées dans la cage de transmission planétaire (7 ; 37) de l'engrenage planétaire de l'étage tout-terrain, et **en ce que** la première roue menée (14 ; 25 ; 42) est agencée en amont de l'engrenage planétaire (5, 8, 9 ; 33, 34, 35) de l'étage tout-terrain, et la seconde roue menée (16 ; 22 ; 41) est agencée en aval de celui-ci.

2. Boîte de transfert à deux étages selon la revendication 1, **caractérisée en ce que** les roues de compensation (11) sont des roues coniques agencées entre les roues planétaires (8) de l'engrenage planétaire de l'étage tout-terrain, lesquelles roues coniques engrènent directement avec la première et la seconde roues menées (14, 16). (Figures 1, 2).

3. Boîte de transfert à deux étages selon la revendication 2, **caractérisée en ce que** les axes (12) des roues de compensation (11) sont dirigés radialement. (Figures 1, 2).

4. Boîte de transfert à deux étages selon la revendication 1, **caractérisée en ce que** les roues de compensation (21) sont des pignons droits qui engrènent d'un côté avec la première ou la seconde roue menée (25, 22), et d'un autre côté avec un premier pignon intermédiaire (23), et **en ce qu'**un second pignon intermédiaire (24) engrène avec la seconde ou la première roue menée (22, 25), les premier et second pignons intermédiaires (23, 24) étant reliés fixes en rotation à un arbre (26) monté dans la cage de transmission planétaire (7). (Figure 3).

5. Boîte de transfert à deux étages selon la revendication 4, **caractérisée en ce que** les roues de compensation (21) sont agencées coaxialement aux roues planétaires (8) de l'engrenage planétaire, et engrènent avec la seconde roue menée (22), et **en ce que** les premiers pignons intermédiaires (23) sont agencés entre les roues de compensation (21). (Figure 3).

6. Boîte de transfert à deux étages selon la revendication 1, **caractérisée en ce que** les roues de compensation (38, 39) sont des paires d'engrenages cylindriques à denture hélicoïdale, dont l'un (39) engrène avec la première roue menée (42) et l'autre (38) engrène avec la seconde roue menée (41), les première et seconde roues menées (42, 41) étant des pignons droits à denture hélicoïdale (Figures 4, 5).

7. Boîte de transfert à deux étages selon la revendication 6, **caractérisée en ce que** les paires d'engrenages cylindriques (38, 39) sont guidées sans axe dans la cage de transmission planétaire (37), et **en ce que** chaque engrenage cylindrique (38, 39) comporte à la place de l'une des deux roues menées (42, 41) un emplacement libre (43). (Figures 4, 5).

8. Boîte de transfert à deux étages selon la revendication 1, **caractérisée en ce que** la couronne de train planétaire (9 ; 35) est stabilisée, et, pour commuter l'étage tout-terrain, il est prévu un manchon coulissant (31) dont l'extrémité avant est couplée à l'arbre d'entrée (2) au moyen de premières dentures de couplage (30), et dont l'extrémité arrière peut être couplée à la roue solaire (33) ou bien à la cage de transmission planétaire (37) de l'engrenage planétaire au moyen de secondes dentures de couplage (32), le manchon coulissant (31) comportant à son extrémité avant une bague (51) destinée à venir en prise avec une fourchette d'embrayage. (Figures 4, 5).

9. Boîte de transfert à deux étages selon la revendication 8, **caractérisée en ce que** la cage de transmission planétaire (37) forme un arbre creux (38) s'étendant vers l'avant à travers la première roue menée (42), dont l'extrémité avant est supportée dans un palier (49), et comporte un collet radial (50) qui forme avec la bague (51) à l'extrémité avant du manchon coulissant (31) un dispositif de synchronisation pour la commutation de l'étage tout-terrain. (Figures 4, 5).
